# EUROPÄISCHE PATENTSCHRIFT

(11) **EP 0 552 428 B1**
(45) Veröffentlichungstag und Bekanntmachung des Hinweises auf die Patenterteilung: **14.06.1995**
(21) Anmeldenummer: 92118654.0
(22) Anmeldetag: 31.10.1992
(51) Int. Cl.: B62D 43/00

(54) **In einem Nutzfahrzeug-Aufbau tiefliegend angeordneter Ersatzradkasten**
Spare wheel well arranged in a low position in a body of a commercial vehicle
Réceptacle de roue de secours surbaisse dans une coque de véhicule utilitaire

(30) Priorität: 18.01.1992 DE 4201215
(43) Veröffentlichungstag der Anmeldung: 28.07.1993
(73) Patentinhaber: MERCEDES-BENZ AG, 70327 Stuttgart (DE)
(72) Erfinder: Wagner, Wolfgang, Dipl.-Ing., D-7310 Plochingen (DE); Keller, Wolfgang, Dipl.-Ing., W-7033 Herrenberg (DE); Zehender, Hermann, W-7057 Leutenbach 1 (DE)

(56) Entgegenhaltungen:
- EP-A- 0 443 128
- US-A- 3 782 568

## Beschreibung

Die Erfindung betrifft einen in einem Nutzfahrzeug-Aufbau tiefliegend angeordneten Ersatzradkasten mit den Merkmalen des Oberbegriffs von Patentanspruch 1.

Ein derartiger Ersatzradkasten ist aus EP 0 443 128 A1 bekannt. Zur Führung des das Ersatzrad tragenden Radwagens weist dessen Führungsvorrichtung zwei parallele Führungsschienen auf, die jeweils auf gleicher Höhe an eine Kastenseitenwand montiert sind und den Radwagen zwischen sich aufnehmen.

Zum Herausziehen des Radwagens aus dem Ersatzradkasten sind die Führungsschienen mit einem Teilstück aus der offenen Kastenseite heraus verlängerbar. In der herausgezogenen Stellung des Radwagens ist dieser zwischen den Führungsschienen durch Kippen um eine Achse quer zur Ausziehrichtung mit seinem fahrzeugseitigen Ende auf den Boden aufzustellen, danach durch Aufrichten mit den Führungsschienen außer Eingriff zu bringen und zur Durchführung eines Radwechsels in Art einer Sackkarre zu einem schadhaft gewordenen Fahrzeugrad zu fahren.

Um dabei in der Ausziehendstellung des Radwagens im Hinblick auf das große Eigengewicht des Ersatzrades die Biegebeanspruchung der aus dem Ersatzradkasten frei herausragenden Teilstücke der Führungsschienen so gering wie möglich zu halten, ist deren Karosserieüberstand entsprechend klein gewählt. Dies wurde insbesondere dadurch möglich, daß der Ersatzradkasten weder mit einer Verschlußklappe noch mit einem Boden ausgestattet und dadurch der Radwagen zum Aufstellen auf den Boden bereits in einer Ausziehendstellung zu kippen ist, bei der sich der Radwagen in der Horizontalen noch über einen Teil seiner Länge im Ersatzradkasten befindet.

Der Erfindung liegt demgegenüber die Aufgabe zugrunde, das in der Ausziehendstellung des Radwagens an den über die Karosserie überstehenden Teilstücken der Führungsschienen angreifende Biegemoment auch für den Fall günstig zu gestalten, daß der Ersatzradkasten verschließbar ausgebildet sein soll.

Diese Aufgabe wird erfindungsgemäß durch die kennzeichnenden Merkmale des Patentanspruches 1 gelöst.

Die erfindungsgemäße Handhabung einer Verschlußklappe ermöglicht es, diese kastenunterseitig in eine Position zu überführen, die praktisch den gleichen aufbauseitigen Überstand der die kasteninneren Führungsschienen verlängernden Schienenteilstücke wie im Falle einer bodenfreien Ausbildung des Ersatzradkastens ermöglicht.

Ist der Ersatzradkasten hingegen mit einem Boden auszustatten, sind die über den Aufbau vorstehenden Schienenteilstücke lediglich in einem solchen Maße zu verlängern, daß sich der Radwagen für das Aufstellen auf den Boden mit seinem fahrzeugseitigen Fahrzeugende nebst das von ihm getragene Ersatzrad an der vorderen Kastenbodenkante vorbeibewegen läßt.

Das Öffnen des Ersatzradkastens läßt sich dabei durch die nach unten zu schwenkende Verschlußklappe ohne großen Kraftaufwand bewerkstelligen, wobei sich für einen Radwechsel zu handhabende Werkzeuge vorteilhaft an der Klappeninnenseite deponieren lassen, so daß diese bei Abklappen der Verschlußklappe in ihre Liegestellung gut zugänglich bereitgehalten werden.

Die aufbauseitige Anlenkung und Führung der Verschlußklappe wird man dabei derart gestalten, daß bei durch einen Reifenschaden abgesacktem Fahrzeug zwischen Fahrbahn und Verschlußklappe in deren Liegestellung genügend Freiraum zu deren weiteren Handhabung verbleibt.

Vorteilhafte Ausgestaltungen der Erfindung sind Gegenstand von Unteransprüchen.

In der Zeichnung ist ein Ausführungsbeispiel der Erfindung dargestellt. Es zeigen in schematischer Darstellung:
- Figur 1: einen Längsschnitt eines hinter einem Stoßfänger liegenden, durch eine einen Teil des Stoßfängers bildende Verschlußklappe verschlossenen Ersatzradkastens mit in diesem untergebrachtem, mit einem Ersatzrad bestückten Radwagen,
- Figur 2: eine Darstellung ähnlich Figur 1, wobei der Ersatzradkasten geöffnet und dessen Verschlußklappe unter diesen geschoben ist,
- Figur 3: eine Darstellung ähnlich Figur 2, wobei der Radwagen aus dem Ersatzradkasten herausgezogen und auf den Boden aufgestellt worden ist,
- Figur 4: eine perspektivische Ansicht der in eine Zwischenstellung abgeklappten Verschlußklappe, schräg von der Seite und oben gesehen,
- Figur 5: eine Stirnansicht der Verschlußklappe in ihrer unter den Ersatzradkasten verschobenen Endstellung.

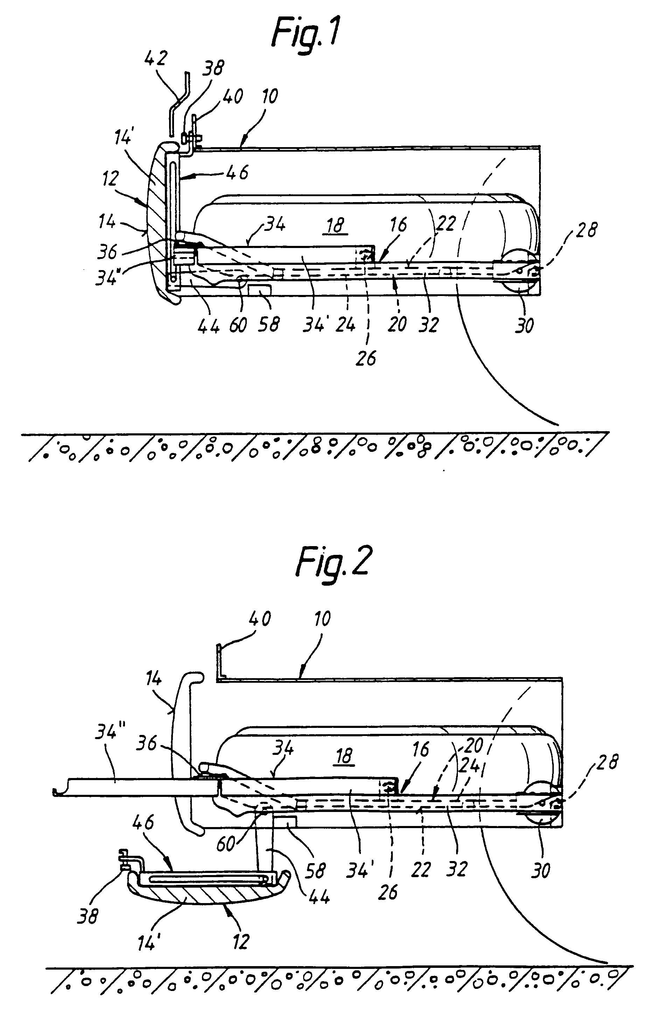

In den Figuren 1 bis 3 ist mit 10 ein im Aufbau eines Nutzfahrzeuges, bspw. eines Omnibusses, tiefliegend angeordneter Ersatzradkasten bezeichnet, der bspw. nach unten offen und mittig hinter der Fahrzeugfront vorgesehen ist.

Dieser Ersatzradkasten 10 ist mittels einer Verschlußklappe 12 verschließbar. Diese ist bspw. durch ein Mittelstück 14' eines Stoßfängers 14 gebildet.

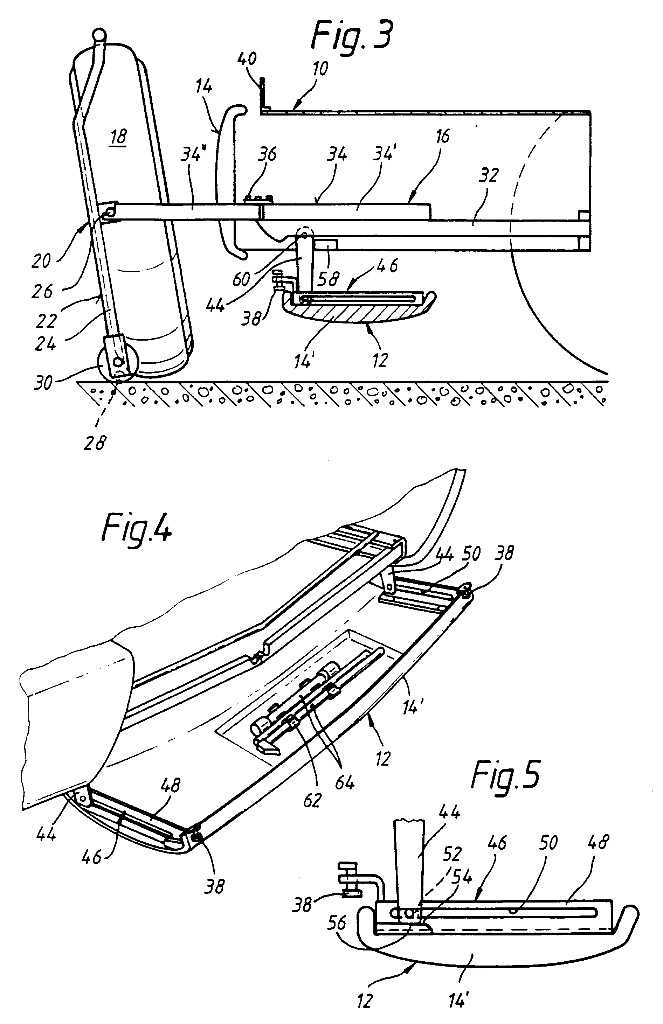

Innerhalb des Ersatzradkastens 10 ist eine Aufnahme- und Führungsvorrichtung 16 für einen ein Ersatzrad 18 tragenden Radwagen 20 installiert. Dieser weist, in Draufsicht der Figur 1 betrachtet, einen im wesentlichen quadratischen Rahmen 22 auf, dessen beiden seitlichen Rahmenschenkel 24 ungefähr in ihrer Längsmitte und im Bereich ihres fahrzeugseitigen Schenkelendes jeweils eine Führungsrolle 26 bzw. 28 tragen. Benachbart zu den Führungsrollen 28 ist jeweils noch eine Laufrolle 30 vorgesehen, um, wie Figur 3 zeigt, den Radwagen 20 in Art einer Sackkarre handhaben zu können.

Die Aufnahme- und Führungsvorrichtung 16 weist an beiden Kastenwänden auf gleicher Höhe jeweils eine Anordnung von Führungsschienen 32 und 34 auf, in welchen die Führungsrollen 26 und 28 des Radwagens 20 zu dessen verschiebbaren Aufnahme in horizontaler Lage im Ersatzradkasten 10 in geeigneter Weise geführt sind. Die konstruktiven Details hierfür sind in der EP 0 443 128 A1 offenbart.

Es sei lediglich erwähnt, daß die Führungsschienen 34 aus dem geöffneten Ersatzradkasten 10 nach außen verlängerbar sind, um aus diesem den Radwagen 20 genügend weit herausziehen und zum Aufstellen seiner Laufrollen 30 auf den Boden um eine Fahrzeugquerachse entsprechend kippen und anschließend so aufrichten zu können, daß sich zum Wegfahren des Radwagens 20 seine mittleren Führungsrollen 26 mit den Führungsschienen 34 außer Eingriff bringen lassen.

Zu diesem Zweck bestehen die Führungsschienen 34 jeweils aus zwei Schienenteilstücken 34' und 34'', wobei letzteres Schienenteilstück 34'' mittels eines Scharniers 36 um 90 Grad in den Ersatzradkasten 10 zur Fahrzeugmitte hin einklappbar ist (siehe Figur 1).

Wie Figur 1 zeigt, ist die Verschlußklappe 12 in ihrer Schließstellung mittels zwei in seitlichem Abstand voneinander vorgesehenen, manuell betätigbaren Verriegelungsgliedern 38 an einem aufbaufesten Halteteil 40 verriegelbar. Die Verriegelungsglieder 38 sind dabei von einer oberhalb des Stoßfängers 14 an der Fahrzeugfront nach oben schwenkbar angeordneten Abdeckblende 42 überdeckt, die in ihrer Abdeckstellung, vorzugsweise vom Fahrzeuginnern aus, entriegelbar ist und so einen diebstahlsicheren Kastenverschluß sicherstellt.

Zum Öffnen des Ersatzradkastens 10 ist die Verschlußklappe 12, wie in Figur 1 strichpunktiert angedeutet, zunächst in eine annähernd horizontale Zwischenstellung abzuklappen und anschließend, wie die Figuren 2 und 3 zeigen, in eine solche Position unter den Ersatzradkasten 10 zu verschieben, daß sich der Radwagen 20 in seiner Ausziehendposition (Figur 3) auf den Boden aufstellen und aus den Schienenteilstücken 34'' herausheben und wegfahren läßt.

Im Hinblick darauf, daß der Ersatzradkasten 10 nach unten offen und die Verschlußklappe 12 unter diesen schiebbar ist, läßt sich der Überstand der Schienenteilstücke 24'' über die Fahrzeugvorderfront hinaus optimal klein und damit deren Biege- sowie die Scharnierbelastung entsprechend günstig gestalten. Es konnte dadurch insbesondere der Vorteil erzielt werden, die Schienenteilstücke 24'' in einer Länge zu halten, die ein Einwärtsklappen derselben in das Kasteninnere ermöglicht, ohne den Ersatzradkasten 10 gegenüber der bekannten Konstruktion in der Breite entsprechend vergrößern zu müssen.

Zum Überführen der Verschlußklappe 12 in ihre Offenstellung ist diese stirnseitig an jeweils einer aufbauseitig angelenkten Traglasche 44 verschwenkbar und relativ zu diesen Traglaschen 44 verschiebbar gehalten. Zur gegenseitigen Verbindung von Traglaschen 44 und Verschlußklappe 12 ist letztere im Bereich ihrer Stirnenden innenseitig jeweils mit einem Führungsbeschlag 46 ausgestattet.

Dieser ist vorzugsweise durch ein quer zur Längsrichtung der Verschlußklappe 12 angeordnetes Winkelprofil gebildet, in dessen von der Klappeninnenseite abstehendem Stegteil 48 sich ein Führungsschlitz 50 erstreckt. In diesem ist ein an der Traglasche 44 verdrehbar gehaltener Nutenstein 52 geführt. Diese Führungsmittel 44, 48, 50, 52 zeichnen sich durch besondere technische Einfachheit aus und sind quasi wartungsfrei.

Um zu vermeiden, daß die Verschlußklappe 12 in ihrer unter den Ersatzradkasten 10 geschobenen, aus Figur 5 ersichtlichen, annähernd horizontalen Endlage unter ihrem Eigengewicht relativ zu den Laschen 44 nach unten kippen kann, ist der Stegteil 48 des Führungsbeschlages 46 an seiner von der Traglasche 44 übergriffenen Seite mit einer vorzugsweise keilförmig ansteigenden Auflauffläche 54 ausgestattet, auf die die Traglasche 44 mit einer sich quer zur Laschenlängsrichtung erstreckenden Stirnfläche 56 in der entsprechenden Verschiebe-Endphase der Verschlußklappe 12 aufläuft. Dabei zeigt Figur 2, daß die Traglaschen 44 beim Abklappen mit nach unten schwenken, dabei jeweils an einen aufbaufesten Anschlag 58 angelegt werden und damit für das Verschieben der Verschlußklappe 12 unter den Ersatzradkasten 10 festgelegt sind.

Zum Schließen des Ersatzradkastens 10 ist die Verschlußklappe 12 zunächst relativ zu den Traglaschen 44 in die in Figur 2 gezeigte Stellung (Zwischenlage) zu verschieben, wobei diese Bewegung durch Anlaufen ihres Nutensteins 52 an das andere Ende des Führungsschlitzes 50 begrenzt wird.

In der Folge werden dann die Traglaschen 44 mitgenommen und dabei um ihre aufbaufeste Schwenkachse 60 verschwenkt, bis die Verschlußklappe 12 ihre Schließlage einnimmt. Anschließend ist sie mittels der Verriegelungsglieder 38 am Frontteil des Fahrzeugaufbaues festzulegen. Danach ist die Abdeckblende 42 in ihre in Figur 1 gezeigte Abdeckstellung zu bringen und zu verriegeln.

Die Verriegelungsglieder 38 sind vorzugsweise an den Führungsbeschlägen 46 gehalten, wodurch sich eine spezielle Befestigung derselben an der Verschlußklappe 12 erübrigt.

Die Verschlußklappen-Führungsmittel 44, 46 einschließlich der Verschlußklappe 12 sind konstruktiv und anordnungsmäßig derart abgestimmt, daß auch im Falle eines Reifendefektes bzw. bei abgesacktem Fahrzeug, zwischen Ersatzradkasten 10 und Fahrbahn ein ausreichend großer Freiraum zur Handhabung der Verschlußklappe 12 verbleibt.

Wie aus Figur 4 ersichtlich ist, sind klappeninnenseitig bspw. Haltespangen 62 zur Aufnahme von zur Durchführung eines Radwechsels erforderlichen Werkzeugen 64 vorgesehen, die in der Zwischenstellung der Verschlußklappe 12 gut zugänglich präsentiert werden.

## Patentansprüche

1. Im Aufbau eines Nutzfahrzeuges tiefliegend angeordneter Ersatzradkasten (10), in dem ein mit einem Ersatzrad (18) bestückter Radwagen (20) in einer Führungsvorrichtung (16) horizontal verschiebbar geführt ist, die über die an einer Fahrzeugseite zugängliche, offene Kastenseite hinaus verlängerbar ist, wobei der Radwagen (20) nach Herausziehen aus dem Ersatzradkasten (10) durch Kippen um eine Achse quer zur Ausziehrichtung auf den Boden aufstellbar und mit der Führungsvorrichtung (16) außer Eingriff bringbar ist,
**dadurch gekennzeichnet**,
daß der Ersatzradkasten (10) mittels einer Verschlußklappe (12) verschließbar ist, die nach Abklappen in eine Liegestellung unter den Ersatzradkasten (10) verschiebbar ist.

2. Ersatzradkasten nach Anspruch 1,
**dadurch gekennzeichnet**,
daß die Verschlußklappe (12) seitlich an jeweils einer aufbauseitig angelenkten, in eine untere Anschlagstellung verschwenkbaren Traglasche (44) schwenkbar und derart verschiebbar gehalten ist, daß sie zumindest in ihrer Schiebeendlage unter dem Ersatzradkasten (10) an den Traglaschen (44) gegen Verschwenken gesichert ist.

3. Ersatzradkasten nach Anspruch 2,
**dadurch gekennzeichnet**,
daß die Verschlußklappe (12) innenseitig je Traglasche (44) einen dieser zugeordneten Führungsbeschlag (46) trägt, der ein die Verschlußklappe (12) in ihrer Schließstellung haltendes und klappenaußenseitig zugängliches Verriegelungsglied (38) aufweist.

4. Ersatzradkasten nach Anspruch 3,
**dadurch gekennzeichnet**,
daß die Verriegelungsglieder (38) mittels einer oberhalb der Verschlußklappe (12) am Fahrzeugaufbau angelenkten und an diesem festlegbaren Abdeckblende (42) überdeckbar sind.

5. Ersatzradkasten nach einem der vorhergehenden Ansprüche,
**dadurch gekennzeichnet**,
daß die Verschlußklappe (12) das Mittelstück (14') eines Stoßfängers (14) bildet, hinter dem der Ersatzradkasten (10) angeordnet ist.

## Claims

1. A spare wheel box (10) disposed low down in the structure of a utility vehicle and in which a wheel carriage (20) fitted with a spare wheel (18) is guided for horizontal displacement in a guide device (16) which is adapted to be extended beyond the open side of the box which is accessible on one side of the vehicle, whereby the wheel carriage (20), after being pulled out of the spare wheel box (10), can be set down on the ground by being tilted about an axis crosswise to the pull-out direction and disengaged from the guide device (16), characterised in that the spare wheel box (10) can be closed by a closure flap (12) which, after being folded down into a resting position, can be pushed under the spare wheel box (10).

2. A spare wheel box according to claim 1, characterised in that the closure flap (12) is pivotally mounted at the side on a supporting member (44) articulated on the structure side and adapted to be pivoted into a lower abutment position being so displaceably supported that, at least in its extreme position after being pushed under the spare wheel box (10), is secured on the supporting members (44) in such a way that it cannot pivot.

3. A spare wheel box according to claim 2, characterised in that the closure flap (12) carries on the inside a guide fitting (46) associated with each supporting member (44) and which has a locking member (38) which maintains the closure flap (12) in its closed position and which is accessible from outside the flap.

4. A spare wheel box according to claim 3, characterised in that the locking members (38) can be masked by a covering panel (42) articulated on the vehicle structure and above the closure flap (12) and adapted to be fixed to the said vehicle structure.

5. A spare wheel box according to one of the preceding claims, characterised in that the closure flap (12) forms the middle piece (14') of a shock absorber (14) behind which the spare wheel box (10) is disposed.

## Revendications

1. Caisse de roue de secours (10) disposée en position basse dans la carrosserie d'un véhicule utilitaire, dans laquelle caisse un chariot de roue (20) équipé d'une roue de secours (18) est guidé de façon à pouvoir se déplacer horizontalement dans un dispositif de guidage (16) qui peut être prolongé au-delà du côté de caisse ouvert accessible sur un côté du véhicule, le chariot de roue (20) pouvant, après extraction hors de la caisse de roue de secours (10), être disposé sur le sol par basculement autour d'un axe transversalement à la direction d'extraction et pouvant être dégagé du dispositif de guidage (16),
caractérisée en ce que
la caisse de roue de secours (10) peut être fermée au moyen d'un clapet de fermeture (12) qui, après rabattement, peut être déplacé dans une position allongée sous la caisse de roue de secours (10).

2. Caisse de roue de secours selon la revendication 1,
caractérisée en ce que
le clapet de fermeture (12) peut pivoter latéralement sur chaque attache de support (44), articulée côté carrosserie et pouvant pivoter pour gagner une position de butée inférieure, et est retenu de façon mobile de telle manière qu'il soit empêché de pivoter au moins dans sa position extrême de coulissement sous la caisse de roue de secours (10) sur les attaches de support (44).

3. Caisse de roue de secours selon la revendication 2,
caractérisée en ce que
le clapet de fermeture (12) porte, à l'intérieur de chaque attache de support (44), une ferrure de guidage (46), affectée à l'attache et qui présente un organe de verrouillage (38) qui maintient le clapet de fermeture (12) dans sa position de fermeture et qui est accessible par le côté extérieur du clapet.

4. Caisse de roue de secours selon la revendication 3,
caractérisée en ce que
les organes de verrouillage (38) peuvent être recouverts d'un capot de couverture (42) articulé sur la carrosserie de véhicule au-dessus du clapet de fermeture (12) et pouvant être fixé sur la carrosserie.

5. Caisse de roue de secours selon l'une des revendications précédentes,
caractérisé en ce que
le clapet de fermeture (12) constitue la pièce centrale (14') d'un pare-chocs (14) derrière lequel est disposée la caisse de roue de secours (10).
